# EUROPÄISCHE PATENTANMELDUNG

(11) **EP 4 834 808 A1**
(43) Veröffentlichungstag der Anmeldung: **04.11.2026**
(21) Anmeldenummer: 26173758.9
(22) Anmeldetag: 21.04.2026
(51) Int. Cl.: B65G 47/61, B65G 9/00, B65G 15/60, B65G 15/62

(54) **ENTLADESTATION, ENTLADEVERFAHREN UND HÄNGEFÖRDERANLAGE FÜR TRANSPORTTASCHEN**

(30) Priorität: 30.04.2025 DE 102025116687
(71) Anmelder: SSI Schäfer Automation GmbH (AT), 8051 Graz (AT)
(72) Erfinder: Maierhofer, Kathrin, 8153 Gratwein-Strassengel (AT); Grössl, Christoph, 8010 Graz (AT)
(74) Vertreter: Witte, Weller & Partner Patentanwälte mbB

(57) **Zusammenfassung**

Es werden offenbart ein Verfahren und eine Entladestation für eine Entladung einer hängend geförderten Tasche (20), die mit einem Artikel beladen ist und die in ihrem unteren Bereich einen Verschluss aufweist, wobei die Entladestation aufweist: einen Hängeförderer mit einer Transportschiene; einen Aufnahmeförderer zur Aufnahme des aus der Tasche (20) entladenen Artikels; und eine Öffnungseinheit zum Öffnen des Verschlusses, um den Artikel durch Schwerkraft aus der Tasche (20) auf einen Aufnahmeabschnitt des Aufnahmeförderers zu transferieren; wobei zumindest der Aufnahmeabschnitt des Aufnahmeförderers federnd ausgebildet ist.

## Beschreibung

Die vorliegende Offenbarung betrifft eine Entladestation und ein Verfahren, insbesondere zur automatisierten, schwerkraftbasierten und besonders schonenden Entladung von hängend geförderten Taschen, die mit empfindlichen und/oder zerbrechlichen Artikeln beladen sind. Ferner betrifft die Offenbarung eine Hängeförderanlage.

Die DE 10 2012 018 925 A1 offenbart eine Entladestation für mit Artikeln befüllte Hängefördertaschen, die in ihrer Förderstellung lotrecht unter einer Förderschiene eines Hängeförderers hängen. Die Taschen können ausschließlich über ein oberes Öffnungsmaul beladen und entladen werden. In der Entladestation wird, in einer Taschenentladeposition, ein unteres Ende der befüllten Taschen über die Horizontale hinaus angehoben und dadurch verschwenkt, so dass die Artikel aufgrund von Schwerkraft aus einer, eigentlich oben vorgesehenen, Beladeöffnung der gestoppten Tasche, in der Förderrichtung des Hängeförderers, nach vorn und unten herausfallen. Die herausrutschenden Artikel werden von einem angetriebenen, abfallend geneigten Bandförderer aufgenommen, der unmittelbar vor und mit einem gewissen Höhenunterschied unterhalb der Taschenentladeposition angeordnet ist. Der Bandförderer kann um eine horizontale Achse schwenkbar sein, um eine Fallhöhe zu minimieren. Dennoch können die Artikel beim Entladen beschädigt werden, weil entweder die Fallhöhe noch immer zu groß ist und/oder weil die Artikel mit einer zu hohen Geschwindigkeit aus der Tasche fallen. Das Anheben und Schwenken der Tasche in die Entladestellung kostet Zeit und verringert den Durchsatz, insbesondere wenn der Hängeförderer während des Entladens angehalten wird. Der Hubmechanismus stellt eine zusätzliche Komponente der Station dar, die die Kosten erhöht, gewartet werden muss und fehleranfällig ist, was wiederum die Entladesicherheit und - Zuverlässigkeit reduzieren kann.

Die DE 10 2011 101 987 A1 offenbart ebenfalls eine Entladestation für mit Artikeln befüllte Hängefördertaschen. Die Taschen sind an ihren unteren Enden dauerhaft mit einem Boden verschlossen und an ihren oberen Enden jeweils mit einem Verschluss versehen, der eingerichtet ist, eine Rückwand der jeweiligen Tasche freizugeben, so dass die Rückwand, entgegen der Förderrichtung, nach hinten und unten geklappt werden kann, um die Tasche zu beladen und entladen. Die geöffnete Rückwand kann von einer geneigten statischen Entladefläche aufgenommen werden, die unterhalb und stromaufwärts zu einer Taschenentladeposition angeordnet ist. Bei ausreichender Neigung der Entladefläche können die Artikel dann selbsttätig aus der Tasche auf die Entladefläche rutschen, wodurch die Artikel aufgrund einer hohen, durch die große Neigung hervorgerufenen, Rutschgeschwindigkeit beschädigt werden könnten. Ist die Neigung zu gering, verbleiben die Artikel auf der Rückwand und werden, auf der Rückwand sitzend entgegen einer gewünschten Entladerichtung, ungewollt von der Entladefläche heruntergezogen, wenn die Tasche weiter gefördert wird und die Entladeposition verlässt. Alternativ kann die Entladung ohne die Entladefläche im freien Fall erfolgen, was die Artikel, abhängig von der Fallhöhe, beschädigen (z.B. durch eine äußere Verformung) kann. Eine Entladung im freien Fall ist nicht gewünscht, weil die Artikel beschädigt werden könnten. Das Gleiche gilt, wenn die Artikel zu schnell von der Fläche abrutschen. Das Verschließen der Tasche ist aufwändig.

Des Weiteren sind Entladestationen bekannt, bei denen Taschen, die an ihren unteren Enden wiederverschließbar geöffnet werden können, hängend über abfallend geneigte, passiv (d.h. ohne eigenen Antrieb) betriebene Rutschen bewegt werden und dort automatisiert geöffnet werden, so dass die Artikel im freien Fall auf die Rutsche fallen, von wo sie z.B. zu einem Packplatz rutschen können. Eine Gleitfläche der Rutschen kann mit einem dämpfenden, verschleißarmen und maßstabilen Kunststoff beschichtet sein oder die Gleitfläche kann direkt aus Stahlblech hergestellt sein. Eine derartige Entladestation, die konstruktiv aufwändig ist und insbesondere in einer Höhenrichtung nicht kompakt baut, ist in der EP 4 477 587 A1 beschrieben. Ferner sind Rutschen aus straff gespannten, aufgehängten Stoffbahnen (z.B. aus Zelt- oder Lkw-Plane) bekannt. Bei allen Varianten besteht das Risiko, dass die Artikel aufgrund einer zu großen Fallhöhe bzw. Rutschgeschwindigkeit beschädigt werden. Die Entladestationen weisen eine erhebliche Bauhöhe auf. Die Taschenhängefördertechnik muss in unterschiedlichen Höhenniveaus angeordnet werden, was Steigungs- und Gefälleabschnitte erforderlich macht, die konstruktiv aufwändig und fehleranfällig sind. Die Wartung ist erschwert, weil die Techniker über einem normalen Bodenniveau arbeiten müssen.

Im Bereich der Schüttgutförderung werden Schwerlast-Gurtförderer mit einem sogenannten Prallbett verwendet. Ein Prallbett ist eine zusätzliche Vorrichtung, die bettartig unter dem Förderband an Übergabepunkten installiert wird, um einen Aufprall von herabfallendem Material zu absorbieren und das Förderband vor Beschädigungen zu schützen. Es besteht typischerweise aus einer stabilen Stahlrahmenkonstruktion mit darauf montierten Prallleisten aus Gummi oder Polyurethan, die eine gleichmäßige Unterstützung über die gesamte Bandbreite bieten. Ferner gibt es luftunterstützte Förderbänder, die ein Luftkissen nutzen, um einen Fördergurt reibungsvermindert zu tragen. In diesen Kontexten geht es darum, die Effizienz und Langlebigkeit des Fördergurts zu erhöhen.

Die DE 10 2018 201 676 A1 betrifft eine Tragvorrichtung zum Aufnehmen von Waren, umfassend eine Tragwand, welche eine Vorderwand und eine Rückwand aufweist, zwischen einem Verschlusszustand und einem Offenzustand anordenbar ist, in dem Verschlusszustand ein Tragvolumen zum Aufnehmen der Waren zumindest teilweise nach vorne, nach unten und nach hinten begrenzt und in dem Offenzustand das Tragvolumen nach unten freigibt.

Die CN 109 46 69 06 A betrifft Fördervorrichtungen, die einen an einer Schiene aufgehängten Gegenstand befördern und Folgendes aufweisen: einen Beutel, Aufhängeteile mit einem Hauptkörper sowie zum Aufhängen am Hauptkörper; sowie eine Lageänderungsvorrichtung, die die Lage des Beutels verändert; wobei der Beutel eine Öffnung aufweist, durch die der Gegenstand in den Hauptkörper eingeführt und aus diesem entnommen wird; wobei die Lageänderungsvorrichtung einen Eingriffsteil aufweist, der mit dem Hauptkörper in Eingriff steht, wobei durch das Einrasten des Eingriffsteils in das Innere des Hauptkörpers mindestens eine der folgenden Haltungsänderungen durchgeführt wird: von der Haltung zum Transport des Gegenstands in die Haltung zum Einlegen des Gegenstands in die Öffnung; oder von der Position zum Transport zum Gegenstand in die Position, in der der Gegenstand aus der Öffnung ausgegeben wird.

Die CN 106 044 050 A betrifft eine Zuführvorrichtung für die industrielle Fertigung. Die Zuführvorrichtung für die industrielle Fertigung umfasst zwei Antriebswellen, ein erstes Förderband, ein zweites Förderband, Stützsäulen und einen Motor. Die Antriebswellen sind symmetrisch an den beiden Enden des ersten Förderbands angebracht. Das zweite Förderband ist oberhalb des ersten Förderbands angeordnet, und zwischen dem ersten und dem zweiten Förderband sind Trennkammern vorgesehen. In den Trennhohlräumen sind mehrere Federn angeordnet. Die beiden Enden jeder Antriebswelle sind symmetrisch mit den entsprechenden Stützsäulen versehen. Der Motor ist an einer der Stützsäulen angebracht. Am oberen Ende des Motors ist eine Steuerung angebracht. Die Zuführvorrichtung für die industrielle Fertigung ist einfach aufgebaut, kostengünstig in der Herstellung und zeichnet sich durch hohe Praxistauglichkeit aus. Durch die Anordnung der Federn in den Trennkammern weist das zweite Förderband eine gewisse Verformbarkeit auf, sodass beim Transport der Werkstücke zur Zuführvorrichtung die Wirkung der Schwerkraft gemildert wird, das Phänomen, dass die Werkstücke durch die Wirkung der Schwerkraft beschädigt werden, wirksam vermieden werden kann, die Kosten gesenkt werden können und die Arbeitseffizienz verbessert werden kann. Die angeordnete Steuerung kann die Drehzahlen der Antriebswellen regeln, um die Fördergeschwindigkeiten der Förderbänder zu steuern, wodurch die Zuführvorrichtung benutzerfreundlich ist.

Daher ist es eine Aufgabe, eine Entladestation vorzusehen, wo zerbrechliche und stoßempfindliche Artikel automatisiert und schonend durch Schwerkraft aus Hängefördertaschen entladen werden, wobei die Entladestation strukturell einfach ausgebildet sein soll. Insbesondere soll ein Steuerungsaufwand minimiert und eine Anzahl von verbauten Komponenten reduziert werden. Vorzugsweise ist die Entladestation sehr kompakt aufgebaut, insbesondere ohne signifikante Höhenunterschiede zwischen zuführenden und abführenden Förderern.

Diese Aufgabe wird gelöst durch eine Hängeförder-Entladestation für eine (automatisierte) Entladung, insbesondere allein durch Schwerkraft, einer hängend geförderten Tasche, die mit einem Artikel beladen ist und die in ihrem unteren Bereich, insbesondere an ihrem unteren Ende, einen, vorzugsweise wiederverschließbaren, Verschluss aufweist, wobei die Entladestation aufweist: einen Hängeförderer mit einer, insbesondere horizontal orientierten, Transportschiene, in der eine Antriebskette zum Transport von Hängeadaptern in und entlang der Transportschiene vorgesehen sein kann; einen Aufnahmeförderer zur Aufnahme des aus der Tasche entladenen Artikels, der separat vorgesehen, horizontal orientiert und/oder angetriebenen sein kann; und eine Öffnungseinheit zum, insbesondere automatisierten, Öffnen des Verschlusses, um den Artikel, insbesondere allein, durch Schwerkraft aus der Tasche auf einen Aufnahmeabschnitt (z.B. in einen Abwurfabschnitt eines Obertrums) des Aufnahmeförderers zu transferieren; wobei zumindest der Aufnahmeabschnitt des Aufnahmeförderers federnd ausgebildet ist.

Die Entladung des bzw. der Artikel erfolgt produktschonend. Zerbrechliche Artikel gehen nicht kaputt, weil eine Fallhöhe minimiert ist und der Aufnahmeförderer wie ein Stoßdämpfer elastisch federnd ausgebildet ist. Empfindliche Artikel werden geschützt.

Die Entladung kann automatisiert erfolgen, insbesondere ohne eine aktive Entnahmemechanik, was eine einfache und wartungsarme Lösung darstellt. Ein Steuerungsaufwand kann verringert werden, weil z.B. keine synchronisierenden Öffnungs-/Entnahmemechanismen erforderlich sind.

Die Bauhöhe ist reduziert. Auf Gefälleabschnitte in der Hängefördertechnik kann verzichtet werden. Dadurch vereinfacht sich eine Layoutplanung. Investitionskosten sind verringert.

Im Unterschied zu der oben beschriebenen vorbekannten Lösung benötigt die vorliegende Entladestation keinen aktiven Anhebe- oder Schwenkmechanismus zur Taschenöffnung. Dadurch wird der mechanische Aufwand reduziert, die Bauhöhe verringert und die Entladegeschwindigkeit erhöht. Der Entladedurchsatz ist erhöht.

Gegenüber bekannten vorbekannten Rutschenlösungen weist die vorliegende Entladestation eine kompaktere vertikale Bauweise auf und eliminiert die unkontrollierte, hohe Rutschgeschwindigkeit durch eine gezielte Verknüpfung der Förder- und Entladebewegung über den aktiv angetriebenen, elastischen Aufnahmeförderer.

Vorzugsweise ist zumindest der Aufnahmeabschnitt des Aufnahmeförderers federnd, indem der Aufnahmeabschnitt selbst elastisch ist, so dass sich der Aufnahmeabschnitt vertikal nach unten dehnt, wenn der Aufnahmeabschnitt durch den entladenen Artikel belastet ist.

Der Aufnahmeabschnitt kann wie ein Sprungtuch wirken, was in einer direkten Dämpfung beim Aufprall resultiert. Es sind keine zusätzlichen Dämpfungseinrichtungen erforderlich, was in einer Kosteneinsparung resultiert.

Ein Artikelverschleiß kann reduziert werden. Eine Aufprallenergie wird reduziert. Es kommt zu weniger Bruch und zu keinen (Mikro-)Rissen im Artikel. Die Dämpfung ist selbstanpassend an verschiedene Artikelgewichte und erfordert keine Nachjustierung.

Insbesondere ist der Aufnahmeabschnitt unterstützungsfrei in einem Gestell des Aufnahmeförderers gelagert.

Damit gibt es für den Aufnahmeabschnitt Raum zur Ausdehnung nach unten. Für den Aufnahmeabschnitt wird im Falle einer Belastung durch den entladenen Artikel eine maximale Bewegungsfreiheit vorgesehen. Die Dämpfung ist optimiert. Der Aufnahmeabschnitt kann frei durchhängen.

Eine effektive Reibfläche wird reduziert. Es kommt zu weniger Verschleiß und einem leiseren Betrieb des Aufnahmeförderers. Eine Reinigung ist vereinfacht, so dass sich der Aufnahmeförderer besonders gut für hygienekritische Anwendungen (z.B. in der Food- oder Pharmaindustrie) eignet. Die Gesamtkonstruktion ist kostengünstig, weil keine Stützrollen oder Betten benötigt werden.

Vorzugsweise wird der Aufnahmeförderer gurtspannerfrei betrieben.

Dies resultiert in einem reduzierten mechanischen Aufbau, einem verringerten Wartungsbedarf und einer verringerten Komplexität. Ein Justieraufwand kann verringert werden, was in einer höheren Betriebszeit resultiert. Der Aufnahmeförderer ist besser für leichte oder empfindliche Fördergurte geeignet, die keine hohe (innere) Spannung vertragen. Ein Energieverbrauch kann aufgrund einer reduzierten Reibung verringert werden.

Insbesondere ist der Aufnahmeförderer ein endlos umlaufender Gurtförderer, der einen Gurt als Förderorgan aufweist, wobei der Aufnahmeabschnitt durch zumindest einen Teil eines Obertrums des Gurts gebildet ist.

Der Gurtförderer kann kontinuierlich bewegt werden, so dass es zu keinen Stoßbelastungen durch einen Taktbetrieb kommt. Der Gurtförderer kann leicht in bestehende Förderanlagen integriert werden. Das Obertrum ist in Position und Zeit definiert steuerbar und eignet sich somit besonders gut für eine Fenstertechnologie. Der Gurtförderer weist weniger Bauteile auf, was in einer erhöhten Zuverlässigkeit resultiert.

Vorzugsweise ist zumindest der Aufnahmeabschnitt des Aufnahmeförderers federnd, indem Trag- bzw. Umlenkrollen des Aufnahmeförderers über Federelemente (z.B. Federpakete, Schraubenfedern, Gasdruckdämpfer, hydraulische Stoßdämpfer, etc.) federnd in einem Gestell des Aufnahmeförderers gelagert sind, insbesondere während der Gurt straff gespannt ist.

Federelemente ermöglichen eine Dämpfung auch bei straff gespannten Gurten, so dass es mehr Layoutoptionen gibt. Der Gurt kann straff gespannt bleiben (z.B. für eine hohe Fördergenauigkeit), ist aber trotzdem weich gefedert. Der Aufbau kann modular gewählt werden. Verschiedene Federhärten können abhängig vom Artikel und Gewicht eingesetzt werden. Die Maßnahme stellt eine weitere Option zur aktiven Dämpfung dar (z.B. hydraulisch steuerbar für aktive Systeme). Präzision und Dämpfung können in einem System kombiniert werden.

Insbesondere ist der Aufnahmeabschnitt (vorzugsweise lotrecht) unter einer durch die Öffnungseinheit definierten Öffnungs- bzw. Entladeposition der Tasche angeordnet.

Eine Zielposition für entladene, fallende Artikel kann exakt definiert werden, insbesondere ohne eine seitliche Abweichung. Ein Versatz zwischen dem Hängeförderer und dem Aufnahmeförderer wird nicht benötigt, so dass das Layout kompakt bleibt. Ein Risiko kann reduziert werden, dass Artikel neben den Aufnahmeförderer fallen, was wiederum eine Prozesssicherheit erhöht.

Vorzugsweise sind der Hängeförderer und der Aufnahmeförderer zumindest in einem Bereich des Aufnahmeabschnitts deckungsgleich bzw. überlappend angeordnet.

Eine Überlappung des Hängeförderers und des Aufnahmeförderers verhindert Fehlentladungen. Die Entladung erfolgt zuverlässig. Die Prozesssicherheit ist erhöht. Die Entladestation ist fehlerresistent gegenüber Positionsabweichungen. Eine Synchronisierung durch Sensorik wird nicht benötigt, was sich in einem verringerten Steuerungsaufwand äußern kann. Eine Montagefreundlichkeit wird erhöht, da beide Systeme auf einem gleichen Niveau, d.h. ohne Höhensprung, geplant werden können.

Insbesondere ist ein Vertikalabstand dᵥ zwischen der Schiene und dem (unbelasteten) Aufnahmeabschnitt, in einem Entladepunkt minimal, so dass das untere Ende der (ungefüllten) Tasche max. 30 bis 50 mm von einer Oberseite des Aufnahmeförderers entfernt ist.

Eine minimale Fallhöhe resultiert in einer reduzierten Aufprallenergie. Dies ist sehr gut für extrem empfindliche Artikel geeignet.

Vorzugsweise ist der Aufnahmeförderer eingerichtet, mit einer Geschwindigkeit betrieben zu werden, so dass der Artikel während eines Entladevorgangs aus der Tasche gezogen wird, insbesondere während die Tasche und der Aufnahmeförderer (kontinuierlich) weiterbewegt werden.

Die Relativgeschwindigkeiten erlauben ein kontrolliertes Herausziehen des Artikels. Die Entladung erfolgt weich und gezielt. Der Artikel kann definiert in eine Richtung entnommen werden, d.h. die Entladung erfolgt kontrolliert. Ein Übergang ist sanfter als bei einem plötzlichen Fall, so dass der Artikel mechanisch weniger belastet wird. Eine Taschenmechanik wird entlastet, was in einer längeren Lebensdauer der Taschen resultiert.

Insbesondere ist die Entladestation eingerichtet, den Aufnahmeförderer und die Tasche während eines Entladevorgangs mit unterschiedlichen Geschwindigkeiten zu bewegen.

Auf diese Weise ist eine dynamische Entladesteuerung (in Abhängigkeit von einem Artikeltyp oder Taschentyp) möglich. Dies bedeutet mit anderen Worten, dass man sich an unterschiedliche Typen anpassen kann. Die Steuerung ist flexibler.

Eine flexible Taktsteuerung ist unabhängig vom Hängeförderer möglich. So kann eine fördertechnische Entkopplung erzielt werden.

Vorzugsweise ist die Entladestation eingerichtet, den Aufnahmeförderer mit einer Fenstertechnologie zu betreiben, wobei der Aufnahmeabschnitt ein Fenster der Fenstertechnologie bildet, und wobei das Förderorgan insbesondere barrierefrei ausgebildet ist, d.h. eine durchweg glatte Oberseite (insbesondere ohne Stollen) aufweist.

Die Fenstertechnologie erlaubt ein präzises Artikel-Tracking. Die Kommissioniergenauigkeit und -effizienz kann erhöht werden. Die entladenen Artikel werden zeitlich und räumlich exakt positioniert, was für eine vollautomatische Auftragszusammenstellung von Vorteil ist. Jeder Artikel kann eindeutig am Auftrag zugeordnet werden, was Fehlkommissionierungen reduzieren kann.

Eine barrierefreie Oberfläche ist gut für instabile Artikel, weil es keine Kanten und keine Blockaden gibt, die ein Umfallen oder Bewegungen der Artikel provozieren.

Diese Aufgabe wird ferner gelöst durch ein Verfahren zum Entladung eines Artikels aus einer Tasche mittels einer Hängeförder-Entladestation, die insbesondere nach der oben beschriebenen Art ausgebildet ist, wobei das Verfahren folgende Schritte umfasst: Fördern der Tasche mittels eines Hängeförderers entlang einer Transportschiene in eine Entladeposition; Positionieren eines Aufnahmeabschnitts eines federnd ausgebildeten Aufnahmeförderers lotrecht unter der Tasche; Öffnen eines in einem unteren Bereich der Tasche angeordneten Verschlusses durch eine Öffnungseinheit; Entladen des Artikels durch Schwerkraft aus der Tasche auf den Aufnahmeabschnitt; Abfedern eines Aufpralls des Artikels durch eine federnde Bewegung des Aufnahmeabschnitts; und Weiterfördern des Artikels durch den Aufnahmeförderer in einer Förderrichtung.

Das Verfahren erzielt die gleichen Vorteile wie die oben beschriebene Hängeförderer-Entladestation.

Vorzugsweise werden der Hängeförderer und der Aufnahmeförderer mit unterschiedlichen Fördergeschwindigkeiten betrieben werden, insbesondere jeweils kontinuierlich.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Offenbarung zu verlassen.

Ausführungsformen sind in den Zeichnungen dargestellt und werden in der nachfolgenden Beschreibung näher erläutert.
- Fig. 1: zeigt eine perspektivische Ansicht einer Entladestation;
- Fig. 2: eine Seitenansicht der Entladestation der Fig. 1;
- Fig. 3: veranschaulicht eine Entladesequenz zu drei aufeinanderfolgenden Zeitpunkten (Fig. 3A-C); und

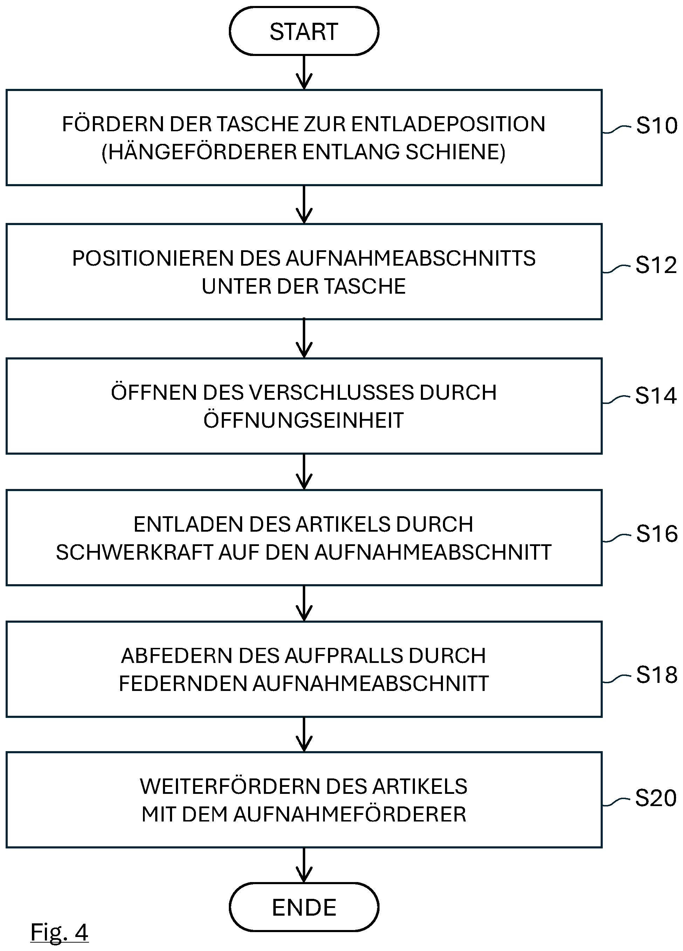

- Fig. 4: zeigt ein Flussdiagramm eines Entladeverfahrens.

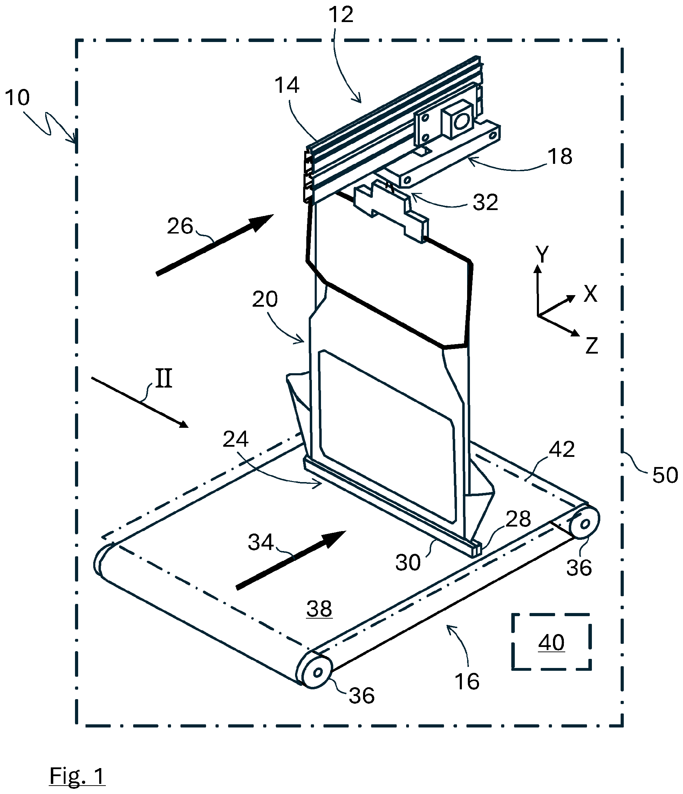

Fig. 1 zeigt eine perspektivische Ansicht einer Hängeförder-Entladestation 10, die nachfolgend auch kurz nur als "Entladestation" 10 bezeichnet wird. Die Entladestation 10 umfasst einen Hängeförderer 12 mit einer profilartigen (Transport-)Schiene 14, die in Fig. 1 nur teilweise dargestellt ist, einen Aufnahmeförderer 16 und eine Öffnungseinheit 18. Vorzugsweise ist der Aufnahmeförderer 16 aktiv angetrieben. Dies bedeutet, dass der Aufnahmeförderer 16 einen (nicht dargestellten) Antrieb aufweist, um sein Förderorgan, wie z.B. einen Gurt 38, zu bewegen. Das Fördererorgan könnte antriebsgesteuert bewegt werden, indem seine Fördergeschwindigkeit aktiv, und insbesondere variabel, gesteuert wird.

Der Aufnahmeförderer 16 ist federnd ausgebildet, so dass Artikel 22 beim Entladen federnd aufgenommen werden. Dies bedeutet insbesondere, dass ein Aufnahmeabschnitt 42 des Aufnahmeförderers 16, und insbesondere der Aufnahmeförderer 16 selbst, (vertikal) nach unten auslenkbar ist. Der Aufnahmeabschnitt 42 kann sich nach unten bewegen, so dass ein Aufprall des Artikels 22 auf den Aufnahmeförderer 16 weich abgefedert bzw. gedämpft wird. Die Dämpfung wird vorzugsweise dadurch erzielt, dass ein Förderorgan des Aufnahmeförderers 16 selbst elastisch ist, insbesondere um in einem beladenen Zustand, in welchem der entladene Artikel 22, nach dem Aufprall, auf dem Aufnahmeförderer 16 positioniert ist, nach unten, insbesondere dauerhaft, durchzuhängen. In diesem Fall kann das Fördererorgan, weniger stark als üblich bei Bandförderern üblich, gespannt sein. Der Aufnahmeförderer 16 ist federnd ausgebildet, um eine weiche Artikelaufnahme zu ermöglichen. Dies trägt wesentlich zur Reduzierung einer Aufprallenergie bei und schützt empfindliche Artikel 22 wie Glaswaren, Elektronik oder dünnwandige Kunststoffprodukte vor Beschädigung, wie es unten noch erläutert werden wird.

Die Entladestation 10 ist zur automatisierten Entladung von hängend geförderten (Hängeförder-)Taschen 20 eingerichtet, die jeweils mit einem oder mehreren (nicht dargestellten) Artikeln 22 beladen sind. Die Entladung erfolgt vorzugsweise schwerkraftbasiert, d.h. insbesondere allein durch die Schwerkraft, ohne dass weitere externe Antriebe zum Bewegen der Artikel 22 eingesetzt werden. Ein Zusammenspiel aus schwerkraftbasierter Entladung, einem minimalen Vertikalabstand (beispielsweise kleiner als 10 mm bei leerer Tasche) und einem federnden Aufnahmeförderer 16 kann für eine kontrollierte, passive und materialschonende Entladung sorgen. Die Entladung erfolgt ohne zusätzliche Mechanik zur Artikelmanipulation, was einen Wartungsaufwand und Fehlerquellen reduziert.

Die Tasche 20 der Fig. 1 ist in einem leeren und geschlossenen Zustand gezeigt. Die Tasche 20 kann aufweisen: einen schwenkbar gelagerten, oberen Beladerahmen, der eine Beladeöffnung darstellt; seitlich auskragende Seitenwände; und/oder eine Hängeadapterkompatibel ausgebildete Aufhängeeinrichtung. Diese Komponenten der Tasche 20 und ein Taschenaufbau sind in der DE 10 2013 101 199 A1 beschrieben, auf die diesbezüglich Bezug genommen wird.

Allgemein gilt, dass die leere Tasche 20 in einer Höhe über dem Aufnahmeförderer 16 positioniert ist und bewegt wird, dass eine Fallhöhe der Artikel 22 während eines Entladevorgangs minimal ist und im Idealfall gar nicht existiert. Vorzugsweise werden der Hängeförderer 12 und der Aufnahmeförderer 16 in der Höhenrichtung so zueinander angeordnet und ausgerichtet, dass die leere Tasche 20 eine Oberseite des Aufnahmeförderers 16 gerade nicht berührt, was einen Verschleiß der Tasche 20 aufgrund von Kontakt mit dem Aufnahmeförderer 16 vermeidet. Im befüllten Zustand wird die Tasche 20 durch den darin befindlichen Artikel 22 ausgebeult und hängt deshalb höher über dem Aufnahmeförderer 16 als die leere Tasche 20, so dass sich die Fallhöhe mit zunehmender Artikelabmessung in der Regel erhöht.

In Fig. 1 ist diese Relativpositionierung so gewählt, dass die leere Tasche 20 die Oberseite gerade nicht berührt. In ihrem unteren Bereich, insbesondere an ihrem unteren Ende, kann jede der Taschen 20 einen Verschluss 24 aufweisen. Der Verschluss 24 kann z.B. durch, in einer Förderrichtung 26 des Hängeförderers 12 betrachtet, vordere und hintere Verschlussleisten 28 und 30 implementiert sein, die insbesondere mechanisch, elektrisch oder magnetisch miteinander verriegelbar sind. Der Verschluss 24 ist eingerichtet, durch die Öffnungseinheit 18 wiederverschließbar geöffnet zu werden. Die Öffnungseinheit 18 ist eingerichtet, den geschlossenen Verschluss 24 zu öffnen, so dass geladene Artikel 22, insbesondere allein durch die Schwerkraft, aus der Tasche 20 auf den Aufnahmeförderer 16 transferiert werden. Die Öffnungseinheit 18, der Verschluss 24 sowie das Öffnungsprinzip können z.B. so ausgebildet sein, wie es in der DE 10 2021 003 096 A1 beschrieben ist, auf die hier Bezug genommen wird. Die Öffnungseinheit 18 kann durch (nicht dargestellt) elektrische Kontakte an den Taschen 20 und am Hängeförderer 12 realisiert sein, so dass die Taschen 20 bei einer Passage der Kontakte der Öffnungseinheit 18 bestimmt werden, um den Verschluss 24 zum Beispiel elektromechanisch zu betätigen. Die Taschen 20 weisen jeweils eine Vorderwand, an der die vordere Verschlussleiste 28 angebracht ist, und eine Rückwand auf, an der die hintere Verschlussleiste 30 angebracht ist.

Die Taschen 20 können über hier nicht näher gezeigte Hängeadapter 32, die insbesondere als Rolladapter ausgebildet sind, wie sie in der DE 10 2018 116 420 A1 beschrieben sind, auf die diesbezüglich Bezug genommen wird, entlang der Schiene 14 durch eine (nicht dargestellte) Antriebskette gefördert werden. Die Schiene 14 und die Antriebskette können so ausgebildet sein, wie es ebenfalls in der DE 10 2018 116 420 A1 beschrieben, auf die diesbezüglich ebenfalls Bezug genommen wird. Die Schiene 14 ist vorzugsweise horizontal orientiert, insbesondere im Bereich der Entladestation 10.

Der Aufnahmeförderer 16 ist direkt unter dem Hängeförderer 12 angeordnet. Der Aufnahmeförderer 16 ist separat zum Hängeförderer 12 vorgesehen. Der Aufnahmeförderer 16 fördert die entladenen Artikel 22 in einer Förderrichtung 34, die vorzugsweise parallel und gleichgerichtet zur Förderrichtung 26 des Hängeförderers 12 orientiert ist. In der Fig. 1 sind die Förderrichtungen 26 und 34 parallel zur Längsrichtung X der Station 10 orientiert. In diesem Sinne sind der Aufnahmeförderer 16 und der Hängeförderer 12 deckungsgleich angeordnet. Dies bedeutet, dass sich der Aufnahmeförderer 16 und der Hängeförderer 12 in der Vertikalrichtung betrachtet derart überlappen, dass ein entladener Artikel 22 immer sicher auf den Aufnahmeförderer 16 fällt, sobald die Tasche 20 geöffnet wird. Dies bedeutet in noch anderen Worten, dass die Artikel 22 beim Entladen der Taschen 20 nicht seitlich neben den Aufnahmeförderer 16 fallen können. Der Aufnahmeförderer 16 ist also zur Aufnahme der aus den Taschen 20 entladenen Artikeln 22 eingerichtet. Optional kann der Aufnahmeförderer 16 mit nicht dargestellten Seitenführungen (Geländer, Leitplanken, etc.) versehen sein, die ein seitliches Herunterfallen der entladenen Artikel 22 verhindern.

Der Aufnahmeförderer 16 ist insbesondere als ein Gurtförderer implementiert, dessen Förderorgan ein Gurt 38 ist. Der Aufnahmeförderer 16 kann Umlenkungsrollen 36 umfassen, wo das vorzugsweise endlos umlaufende, in sich geschlossene Fördererorgan (z.B. der Gurt 38 oder eine Gliederkette 39) umgelenkt wird. Der Gurt 38 kann elastisch ausgebildet sein. Ferner ist der Aufnahmeförderer 16 vorzugsweise horizontal orientiert, wie in Fig. 1 veranschaulicht. Es versteht sich, dass der Aufnahmeförderer 16 gegenüber der Horizontalen auch geneigt angeordnet sein könnte.

Die Entladestation 10 kann ferner eine Steuerung 40 umfassen, die unten noch näher erläutert werden wird. Die Steuerung 40 kann mit dem Hängeförderer 12, dem Aufnahmeförderer 16 und/oder der Öffnungseinheit 18 in einer (nicht veranschaulicht), z.B. drahtlosen, Signalverbindung stehen. Die Steuerung 40 kann eingerichtet sein, eine jeweilige Fördergeschwindigkeit des Hängeförderers 12 und/oder des Aufnahmeförderers 16 individuell zu steuern, und insbesondere während eines Entladevorgangs aufeinander abzustimmen, wie es unten noch näher erläutert werden wird. Die Steuerung 40 kann ferner eingerichtet sein, die Öffnungseinheit 18 zu steuern, insbesondere im Zusammenspiel mit einer Entladesteuerung des Hängeförderers 12 und des Aufnahmeförderers 16. Wenn die oben erwähnte Öffnungseinheit 18 eingesetzt wird, erfolgt die Entladesteuerung passiv, d.h. die Steuerung 34 muss nicht aktiv eingreifen, um die Taschen 20 zu öffnen. Die Taschen 20 werden geöffnet, indem sie einen gewissen Punkt innerhalb der durch den Hängeförderer 12 vorgegebenen Förderstrecke passieren, wo die Kontakte bestromt werden, was zur Öffnung des Verschlusses 24 führt. Alternative, z.B. rein mechanisch betätigte, Öffnungsmechanismen könnten auch eingesetzt werden, wie sie z.B. in der DE 10 2011 101 987 A1 beschrieben sind, auf die diesbezüglich Bezug genommen wird.

Der Aufnahmeförderer 16 umfasst einen Aufnahmeabschnitt 42, der in Fig. 1 durch eine Strichlinie veranschaulicht ist. Im Beispiel der Fig. 1 ist der Aufnahmeabschnitt 42 durch einen Teil eines Obertrums des als Gurt 38 ausgebildeten Förderorgans gebildet. Dieser Teil des Obertrums erstreckt sich zwischen den Umlenkrollen 36. Es versteht sich, dass der Aufnahmeabschnitt 42 auch kleiner als die in Fig. 1 angegebene Fläche gewählt werden kann. Eine geometrische Größe (Fläche) des Aufnahmeabschnitts 42 kann an den größten der Artikel 22 angepasst sein. Vorzugsweise ist der Aufnahmeabschnitt 42 mindestens so groß wie der größte Artikel 22. Dies bedeutet mit anderen Worten, dass der größte der Artikel 22 geometrisch in den Aufnahmeabschnitt 42 hineinpasst, und zwar unabhängig von seiner Orientierung.

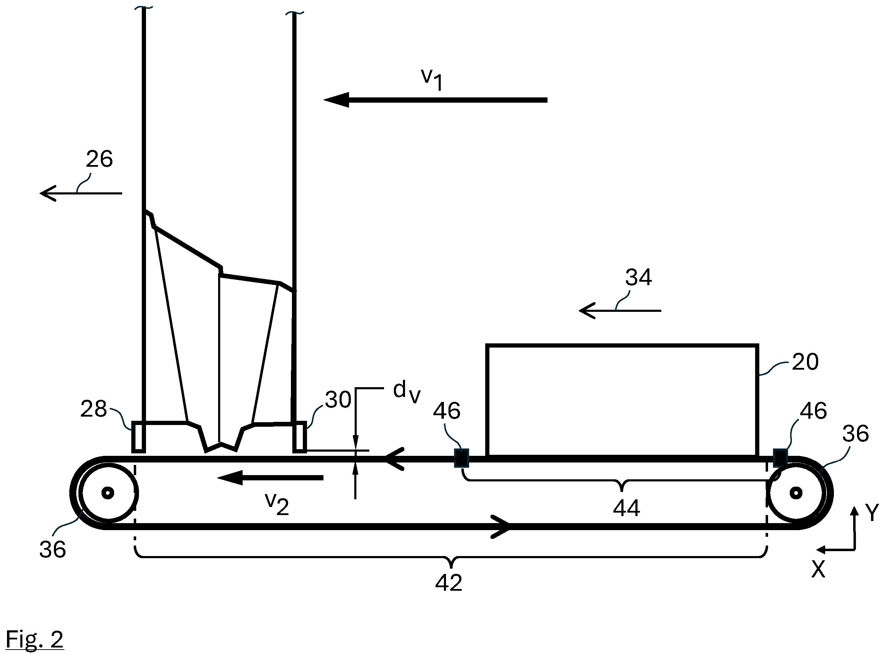

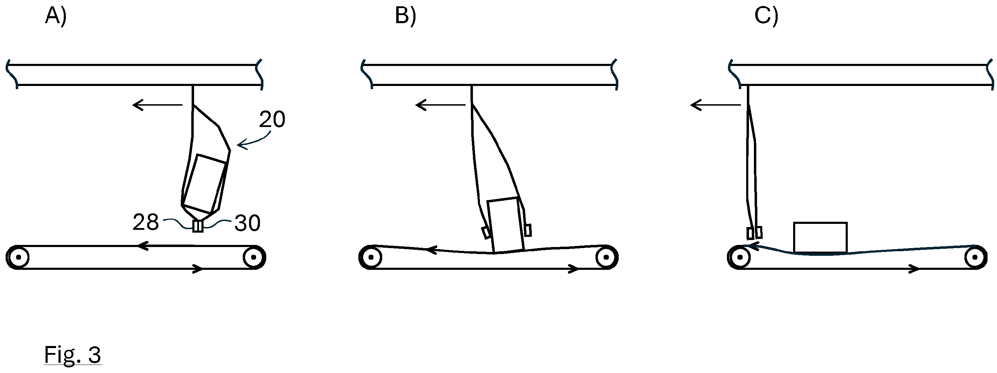

Fig. 2 zeigt eine Seitenansicht der Entladestation 10 der Fig. 1 entlang eines Pfeils II in Fig. 1. Nicht alle Komponenten der Fig. 1 sind in der Fig. 2 gezeigt. Außerdem zeigt die Fig. 2 einen anderen Zustand der Entladestation 10 als die Fig. 1. Die Fig. 2 dient insbesondere einer klimatischen Betrachtung der Entladestation 10, wobei die elastische Eigenschaft des Aufnahmeförderers 16 nicht visualisiert ist. Die elastische Eigenschaft des Aufnahmeförderers 16 ist exemplarisch in der Fig. 3 visualisiert, die unten beschrieben werden wird.

In der Fig. 2 ist die Tasche 20 in einem geöffneten Zustand gezeigt, nachdem der Artikel 22 auf den Aufnahmeförderer (Gurtförderer) 16 entladen wurde. Der entsprechende Entladevorgang ist bereits abgeschlossen. Die Vorderwand und Rückwand der Tasche 20, sowie die Verschlussleisten 28 und 30, sind in der Längsrichtung X, d.h. in der Förderrichtung 26 bzw. 34, (noch) voneinander getrennt und berühren sich nicht. Stromabwärts kann die Tasche 20 wieder geschlossen werden, indem die Verschlussleisten 28 und 30 miteinander in Eingriff gebracht werden.

Ein Vertikalabstand dᵥ zwischen der Tasche 20 und der Oberseite des Aufnahmeförderers 16, insbesondere im Bereich des Aufnahmeabschnitts 42, ist minimal, vorzugsweise kleiner als 10 mm, gewählt.

Die Entladestation 10 kann eingerichtet sein, den Aufnahmeförderer 16 und die zu entladende Tasche 20 mit unterschiedlichen Fördergeschwindigkeiten zu bewegen. In der Fig. 2 wird die Tasche 20 mit einer Geschwindigkeit v1 bewegt, wobei der Aufnahmeförderer 16 mit einer gleichgerichteten Geschwindigkeit v2 bewegt werden kann. Die Geschwindigkeit v1 ist z.B. größer als die Geschwindigkeit v2 gewählt, so dass die Tasche 20 dem entladenen Artikel 22 vorauseilt. Der Artikel 22 wird während des Entladevorgangs durch den Aufnahmeförderer 16 "nach hinten" aus der Tasche 20 herausgezogen, sobald die Tasche 20 geöffnet ist und sich der (noch geladene) Artikel 22 durch Schwerkraft innerhalb der geöffneten Tasche 20 ausschließlich nach unten bewegt, bis er die Oberseite des Obertrums berührt. Es versteht sich, dass die Geschwindigkeit v2 auch größer als die Geschwindigkeit v1 sein könnte, so dass der Artikel 22 während des Entladevorgangs "nach vorn" aus der Tasche 20 gezogen wird.

Die Entladung kann unter Nutzung der sogenannten Fenstertechnologie erfolgen. Die Fenstertechnologie bezeichnet ein Verfahren, bei dem für jeden Kommissionierauftrag ein zeitliches und räumliches Fenster 44 auf einem Förderorgan (hier auf dem Gurt 38) reserviert wird, d.h. also ein bestimmter Abschnitt in Raum und Zeit, in den alle Artikel 22 für diesen Auftrag auf den Gurt 38 aufgegeben werden müssen. Dieser Abschnitt kann dem Aufnahmeabschnitt 42 selbst oder einem kleineren Teil davon entsprechen. In der Fig. 2 ist ein exemplarisches Fenster 44 durch (virtuelle) Fensterbegrenzungen bzw. -markierungen 46 veranschaulicht. Die Fenstertechnologie läuft z.B. wie folgt ab. Ein Kommissionierauftrag wird ausgelöst. Ein oder mehrere Taschen 20 werden, vorzugsweise immer nur mit einem Artikel 20, gemäß dem Auftrag in einem oder mehreren Lagerbereichen gefüllt und zur Entladestation 10 transportiert. Die Steuerung 40 bestimmt ein (oder mehrere) Fenster 44, das ausreichend groß ist, sowie ggf. entsprechende Zeitintervalle, in denen die Artikel 22 in das oder die Fenster 44 auf dem Gurt 38 entladen werden. Die Steuerung 40 weiß dann, dass die entladenen Artikel 22 in dem bzw. den entsprechenden Fenstern 44 zu dem Auftrag gehören. Die entladenen Artikel 22 können anschließend, am Ende des Aufnahmeförderers 16 oder noch weiter stromabwärts, z.B. an einer Packstation gemeinsam verarbeitet, verpackt und/oder verladen werden, um zum Kunden geschickt zu werden.

Die Entladestation 10 eignet sich insbesondere für (intra-)logistische Prozesse mit empfindlichen Konsumgütern, wie z.B. Glasflaschen, kosmetische Produkte oder elektronische Bauteile. Sie ist für Lager- und Kommissionierzentren konzipiert, in denen hohe Taktzahlen bei gleichzeitig geringer mechanischer Belastung der Artikel 22 gefordert sind.

Wie oben bereits erläutert, ist der Aufnahmeabschnitt 42 des Aufnahmeförderers 16 federnd ausgebildet. Nachfolgend werden verschiedene Varianten erläutert werden, wobei zur Vereinfachung der Erläuterung nur auf spezielle bzw. sich unterscheidende Merkmale der jeweiligen Entladestation 10 eingegangen werden wird. Die restlichen Komponenten der nachfolgend betrachteten Entladestationen 10 sind gleich und entsprechend der oben beschriebenen allgemeinen Konfiguration der Entladestation 10.

Fig. 3 zeigt eine Seitenansicht einer Entladestation 10, die zur Vereinfachung der Darstellung lediglich schematisch veranschaulicht ist und bei der der Aufnahmeabschnitt 42 selbst federnd ist. Fig. 3 veranschaulicht eine Entladesequenz zu drei aufeinanderfolgenden Zeitpunkten. Fig. 3A veranschaulicht den Beginn der Entladesequenz, wo die geladene Tasche 20 noch verschlossen ist. In Fig. 3B ist die Tasche 20 bereits geöffnet und der Artikel 22 hat sich aufgrund von Schwerkraft bereits in der Tasche 20 nach unten bewegt und berührt den Aufnahmeförderer 16 im Aufnahmeabschnitt 42. In der Fig. 3C ist die Tasche 20 vollständig entladen und der entladene Artikel 22 ist vollständig auf dem Aufnahmeförderer 16 positioniert.

Der Aufnahmeabschnitt 42 selbst ist federnd, weil das als Gurt 38 ausgebildete Förderorgan des Aufnahmeförderers 16 im unbeladenen, unbelasteten Zustand nur minimal gespannt sein kann. Dies bedeutet insbesondere, dass der Gurt 38 gerade so stark gespannt sein kann, dass es im unbelasteten Zustand (Fig. 3A) keinen Schlupf zwischen dem Gurt 38 und den Umlenkrollen 36 gibt. Im belasteten Zustand, wenn der Gurt 38 den Artikel 22 aufnimmt (Fig. 3B) und transportiert (Fig. 3C), kann das Obertrum des Gurts 38 nach unten durchhängen. Vorzugsweise ist der Aufnahmeabschnitt 42 unterstützungsfrei in einem (nicht veranschaulichten) Maschinengestell des Aufnahmeförderers 16 gelagert. Dies bedeutet beispielsweise, dass keine Stützelemente (Stützrollen, Auflagetisch, Auflagebett, etc.) unterhalb des Obertrums des Gurts 38 vorgesehen sind, so dass sich der Aufnahmeabschnitt 42 frei nach unten bewegen kann. Der Aufnahmeförderer 16 ist insbesondere gurtspannerfrei ausgebildet, d.h. es gibt keinen Gurtspanner wie er sonst bei Bandförderern standardmäßig benutzt wird, um einen üblicherweise unerwünschten Schlupf zu verhindern. Ferner ist es möglich, den Gurt 38 auch noch schwächer zu spannen, so dass im unbeladenen Zustand ein Schlupf zwischen den Umlenkrollen 36 und dem Gurt 38 auftritt. Die Größe, das Material, eine effektive Förderlänge und der Elastizitätsmodul des Gurts 38 können so gewählt werden, dass das Gewicht des leichtesten Artikels 22 eines Artikelspektrums ausreicht, um den entsprechend belasteten Gurt 38 so stark zu spannen, dass der Schlupf verschwindet und der leichteste Artikel 22 an ein stromabwärtiges Ende des Aufnahmeförderers 16 gefördert wird.

Alternativ könnte der Gurt 38 im Bereich des Obertrums zwischen den Umlenkrollen 36 auch ohne jede Art von Spannung (in der Förderrichtung 34) nach unten durchhängen, was in Fig. 3 nicht veranschaulicht ist. In diesem Fall könnte der Gurt 38 an seiner Unterseite z.B. mit einem umlaufenden Zahnriemen (nicht veranschaulicht) versehen sein, der mit den Umlenkrollen 36 in einen formschlüssigen Eingriff gebracht wird, die entsprechend eingerichtet sind, indem sie ein komplementäres Zahnmuster aufweisen.

Der Aufnahmeabschnitt 16 wirkt ähnlich einem Feuerwehr-Sprungtuch. Der fallende Artikel 22 trifft (fallend bzw. rutschend) von oben auf den Aufnahmeförderer 16, der nach unten ausweicht und den Aufprall weich abfedert. Der Aufnahmeförderer 16 gibt kontrolliert nach und verteilt die Energie über eine große Fläche. Die Energie wird nicht in den Körper des Artikels 22 zurückgeleitet. Der Artikel 22 wird schonend aufgenommen, was insbesondere von Vorteil ist, wenn der Artikel 22 zerbrechlich ist. Zerbrechlich bedeutet, dass der Artikel 22 leicht kaputtgehen oder brechen kann, durch Stoß, Druck oder Fall. Zerbrechliche Artikel 22 sind: spröde, d.h. sie geben nicht nach, sondern brechen sofort; empfindlich gegenüber Stößen oder Vibrationen; und/oder weisen keine oder nur eine geringe Elastizität auf. Beispiele für derartige Artikel 22 sind: Glas (z. B. Trinkgläser); Porzellan (z. B. Teller, Tassen, etc.); Keramik; elektronische Bauteile; und/oder manche Kunststoffe oder dünne Metalle. Es versteht sich, dass dieser Katalog nicht abschließend ist.

Des Weiteren ist es möglich, dass der Aufnahmeabschnitt 42 des Aufnahmeförderers 16 federnd ist, indem z.B. zusätzliche (optionale) Trag- bzw. Stützrollen unterhalb des Obertrums, sofern sie vorhanden sind, und die Umlenkrollen 36 des Aufnahmeförderers 16 z.B. über Federelemente federnd im Maschinengestell des Aufnahmeförderers 16 gelagert sind. Das Maschinengestell selbst kann federnd gelagert sein. **In** diesem Fall könnte der Gurt 38 straff gespannt sein, wie es bei Bandförderern üblich ist, um einen Schlupf zu verhindern. Die Federelement könnten implementiert sein durch Federpakete, Schraubenfedern, Gasdruckdämpfer, hydraulische Stoßdämpfer oder Ähnliches, wobei die beiden zuletzt genannten Elemente vorzugsweise aktiv durch die Steuerung 40 gesteuert werden.

Ferner ist es möglich, unterhalb des Aufnahmeabschnitts 42 Dämpfungselemente zwischen dem Obertrum und einem Auflagetisch vorzusehen, um den Aufprall der Artikel 22 weich abzufedern.

Der Begriff "federnd" umfasst in der vorliegenden Offenbarung sowohl eine Auslenkung des Förderorgans selbst (z. B. durch geringe Vorspannung des Gurts), als auch eine bewegliche Lagerung von Trag- oder Umlenkrollen über Federelemente. Alle oben genannten Varianten können alternativ oder kombiniert eingesetzt werden.

Die Hängeförder-Entladestation 10 ist typischerweise Bestandteil einer umfassenden, automatisierten (Hängeförder-)Anlage 50, vgl. Strichlinie in Fig. 1, welche für die Lagerung, Kommissionierung und den Versand der Artikeln 22, insbesondere in intralogistischen Systemen, ausgelegt sein kann.

Die Anlage 50 kann mehrere funktional aufeinander abgestimmte Module umfassen, wobei die Entladestation 10 ein zentrales Modul im Bereich der Übergabe der Artikel 22 aus Hängefördersystemen in bodengeführte Fördersysteme spielt.

In einem bevorzugten Layout kann sich die Transportschiene 14 des Hängeförderers 12 über mehrere Funktionsbereiche hinweg erstrecken. Die Taschen 20, die an Hängeadaptern 32 befestigt sein können, können entlang dieser Schiene 14 zwischen verschiedenen Stationen bewegt werden, wie beispielsweise: Beladestationen, an denen jeweils ein oder mehrere der Artikel 22 in die Tasche 20 gegeben werden; Pufferstrecken oder dynamische Zwischenlager, in denen die Taschen 20 zwischengespeichert oder gestapelt gefördert werden können; und/oder Sortierstationen, in denen die Taschen 20 nach Priorität, Zielregion oder Kommissionierauftrag vorsortiert werden können.

Die Entladestation 10 kann in einem Übergabebereich zwischen dem Hängefördersystem, von dem der Hängeförderer 12 ein Teil ist, und einem bodengeführten Fördersystem angeordnet sein, z. B. einem Gurtförderer, einem Rollenförderer oder einem RBG-Zuführband. Der Aufnahmeförderer 16 ist in diesem Zusammenhang mit dem nachfolgenden Fördersystem gekoppelt, so dass der Artikel 22 nach der Entladung ohne manuelle Eingriffe weitertransportiert werden kann.

Ein beispielhafter Ablauf gestaltet sich wie folgt. Die Tasche 20 wird über den Hängeförderer 12 der Entladestation 10 zugeführt. Dort wird sie über eine Steuerung 40 identifiziert, positioniert und geöffnet, so dass der Artikel 22 schwerkraftbasiert in den Aufnahmeabschnitt 42 des Aufnahmeförderers 16 fällt. Der federnd ausgeführte Aufnahmeabschnitt 42 nimmt den Artikel 22 auf, dämpft dessen Aufprall ab und leitet den Artikel 22 unmittelbar in den nächsten Systembereich weiter.

Die Positionierung der Entladestation 10 innerhalb der Gesamtanlage erfolgt vorzugsweise so, dass eine durchgängige Fließrichtung vom Lagerbereich bis zur Versandvorbereitung gewährleistet ist. Die Fördergeschwindigkeit, Taktung und Übergabezeitpunkte der Entladestation 10 können dabei synchron zur Gesamtsteuerung der Anlage 50 erfolgen. Die Entladestation 10 bzw. deren Steuerung 40 kann mit einer übergeordneten Steuerungseinheit oder einem Lagerverwaltungssystem (z. B. WMS) kommunizieren, das über die Fördergeschwindigkeiten, Artikeldaten und Zielstationen informiert ist.

Optional kann der Aufnahmeförderer 16 so ausgeführt sein, dass er den entladenen Artikel 22 direkt einem Roboterarm, einer Wiegeeinheit oder einer Packstation zuführt. Die Entladestation 10 bildet damit eine wesentliche Schnittstelle zwischen hängenden und stehenden Fördersystemen. Dazu das folgende Beispiel: In einem Kommissionierzentrum mit einem Hängefördersystem transportieren Taschen 20 jeweils einen Einzelartikel zu einer Entladestation 10, die zentral vor einer Verpackungslinie positioniert ist. Der Artikel 22 wird dort entladen, identifiziert und direkt auf ein Packband weitergeleitet, wo er zusammen mit weiteren Artikeln desselben Auftrags verpackt wird. Anschließend erfolgt der Weitertransport zur Versandlinie.

Die modulare und kompakte Bauweise der Entladestation 10 erlaubt eine einfache Integration in vorhandene Anlagenlayouts. Ihre Funktion als schwerkraftbasierte Entkopplungseinheit zwischen Hänge- und Bodenförderung ermöglicht einen besonders energieeffizienten und materialschonenden Gesamtbetrieb.

Die vorliegende Offenbarung betrifft auch ein Verfahren 100 zur Entladung eines Artikels 22 aus einer Tasche 20, insbesondere unter Verwendung der oben beschriebenen Entladestation 10, wie in Fig. 5 veranschaulicht. Das Verfahren 100 ist insbesondere zur automatisierten Entladung von hängend geförderten Taschen 20 geeignet, die mit empfindlichen Artikeln 22 - wie Glasbehältern, Elektronikkomponenten oder kosmetischen Produkten - befüllt sind.

Das Verfahren 100 umfasst mehrere aufeinanderfolgende Schritte.

In einem ersten Schritt S10 wird eine Tasche 20 in eine Entladeposition gefördert. Dabei wird die Tasche 20, die an einem Hängeförderer 12 befestigt ist, entlang einer horizontalen Transportschiene 14 in Richtung der Entladeposition transportiert. Die Tasche 20 befindet sich in einer hängenden Position, vorzugsweise lotrecht unter der Schiene 14. Die Tasche 20 kann an einem Hängeadapter 32 befestigt sein und kann entlang definierter Positionen durch verschiedene funktionale Zonen bewegt werden. Eine Steuerung 40 kann erkennen, ob eine Tasche 20 zur Entladung vorgesehen ist, und dirigiert diese gezielt zur Entladestation 10.

In einem nächsten Schritt S12 wird ein Aufnahmeabschnitt 42 unter der Tasche 20 positioniert. Dies bedeutet, dass der Aufnahmeabschnitt 42 eines federnden, insbesondere elastisch gelagerten, Aufnahmeförderers 16 so positioniert ist, dass er sich direkt unter der zu entladenden Tasche 20 befindet. Der Aufnahmeabschnitt 42 kann beispielsweise durch ein elastisch durchhängendes Förderband oder durch gefederte Stützelemente gebildet sein.

In einem Schritt S14 wird ein Taschenverschlusses 24 geöffnet.

Sobald die Tasche 20 die Entladeposition erreicht, wird der im unteren Bereich der Tasche 20 angeordnete Verschluss 24 geöffnet. Dies erfolgt mittels einer Öffnungseinheit 18, die beispielsweise mechanisch oder elektromagnetisch wirken kann. Durch das Öffnen wird die Unterseite der Tasche 20 freigegeben.

In einem Schritt S16 wird durch Schwerkraft entladen. Nach dem Öffnen fällt der im Inneren befindliche Artikel 22 aufgrund der Schwerkraft aus der Tasche 20 heraus und trifft auf eine Oberseite des darunterliegenden Aufnahmeabschnitts 42. Es ist kein aktiver Entnahmevorgang erforderlich.

In einem Schritt S18 wird ein Aufprall abgefedert. Der Aufnahmeabschnitt 42 ist so ausgebildet, dass er dem Aufprall des fallenden Artikels 22 nachgibt und dadurch die Aufprallenergie dämpft. Dies kann etwa durch ein elastisches Förderband oder durch eine federnd gelagerte Tragstruktur erfolgen. Die Energie wird verteilt und abgebaut, so dass der Artikel 22 weich aufgenommen wird.

In einem Schritt S20 wird der Artikel 22 weitertransportiert. Der Artikel 22 wird durch den Aufnahmeförderer 16 in eine gewünschte Richtung 34 weitergefördert - z. B. zu einer Packstation, einer Sortiereinheit oder einem Pufferbereich. Die Förderrichtung 34 ist vorzugsweise parallel zur Förderrichtung 26 des Hängeförderers 12 orientiert.

Beispielhafte Anwendungsszenarien des Verfahrens 100 sind: in einem E-Commerce-Logistikzentrum werden elektronische Kleinteile wie Smartphones, Kopfhörer oder Akkus in hängenden Taschen 20 kommissioniert und anschließend über die Entladestation 10 automatisch auf einen Fördergurt 38 übergeben, der zur Verpackungseinheit führt; in einem Verteilzentrum für Haushaltswaren werden empfindliche Keramikprodukte über die Entladestation 10 entladen, wobei der federnde Aufnahmeabschnitt 42 einen Bruch durch Stoßbelastung verhindert; oder in einem Lebensmittellogistiklager werden leichte, stoßempfindliche Artikel 22 wie Joghurtbecher, Gläser oder kosmetische Ampullen mit hoher Taktung auf ein Kommissionierband entladen, wobei die Kombination aus minimalem Fallweg und federnder Aufnahme eine beschädigungsfreie Handhabung sicherstellt.

Das Verfahren 100 ist besonders vorteilhaft, da es ohne komplexe Greifer, Roboter oder aktive Entnahmevorrichtungen auskommt. Dadurch reduziert sich der Steuerungsaufwand, die Entladestation bleibt kompakt und mechanisch einfach aufgebaut, und empfindliche Produkte können zuverlässig und schonend entladen werden.

Es versteht sich, dass die oben erwähnten Taschen 20 durch jede Art von Transportbehälter implementiert werden können. So können zum Beispiel auch Kisten, Behälter oder Ähnliches eingesetzt werden. Eine stoffsackartige Ausbildung ist nicht zwingend erforderlich.

### BEZUGSZEICHENLISTE

- 10: (Hängeförder-)Entladestation
- 12: Hängeförderer
- 14: (Transport-)Schiene
- 16: Aufnahmeförderer
- 18: Öffnungseinheit
- 20: (Hängeförder-)Tasche
- 22: Artikel
- 24: Verschluss
- 26: Förderrichtung
- 28: vordere Verschlussleiste
- 30: hintere Verschlussleiste
- 32: Hängeadapter
- 34: Förderrichtung
- 36: Umlenkrolle
- 38: Gurt
- 39: Gliederkette
- 40: Steuerung
- dᵥ: Vertikalabstand
- 42: Aufnahmeabschnitt
- 44: Fenster
- 46: Fensterbegrenzung, virtuell
- 50: (Hängeförder-)Anlage
- 100: Entladeverfahren

## Patentansprüche

1. Hängeförder-Entladestation (10) für eine Entladung einer hängend geförderten Tasche (20), die mit einem Artikel (22) beladen ist und die in ihrem unteren Bereich einen Verschluss (24) aufweist, wobei die Entladestation aufweist:
einen Hängeförderer (12) mit einer Transportschiene (14);
einen Aufnahmeförderer (16) zur Aufnahme des aus der Tasche (20) entladenen Artikels (22); und
eine Öffnungseinheit (18) zum Öffnen des Verschlusses (24), um den Artikel (22) durch Schwerkraft aus der Tasche (20) auf einen Aufnahmeabschnitt (42) des Aufnahmeförderers (16) zu transferieren;
wobei zumindest der Aufnahmeabschnitt (42) des Aufnahmeförderers (16) federnd ausgebildet ist.

2. Hängeförder-Entladestation (10) nach Anspruch 1, wobei zumindest der Aufnahmeabschnitt (42) des Aufnahmeförderers (16) federnd ist, indem der Aufnahmeabschnitt (42) selbst elastisch ist, so dass sich der Aufnahmeabschnitt (42) vertikal nach unten dehnt, wenn der Aufnahmeabschnitt (42) durch den entladenen Artikel (22) belastet ist.

3. Hängeförder-Entladestation (10) nach Anspruch 1 oder 2, wobei der Aufnahmeabschnitt (42) unterstützungsfrei in einem Gestell des Aufnahmeförderers (16) gelagert ist.

4. Hängeförder-Entladestation (10) nach einem der Ansprüche 1 bis 3, wobei der Aufnahmeförderer (16) gurtspannerfrei betrieben wird.

5. Hängeförder-Entladestation (10) nach einem der Ansprüche 1 bis 4, wobei der Aufnahmeförderer (16) ein endlos umlaufender Gurtförderer ist, der einen Gurt (38) als Förderorgan aufweist, und wobei der Aufnahmeabschnitt (42) durch zumindest einen Teil eines Obertrums des Gurts (38) gebildet ist.

6. Hängeförder-Entladestation (10) nach einem der Ansprüche 1 bis 5, wobei zumindest der Aufnahmeabschnitt (42) des Aufnahmeförderers (16) federnd ist, indem Trag- bzw. Umlenkrollen (36) des Aufnahmeförderers (16) über Federelemente federnd in einem Gestell des Aufnahmeförderers (16) gelagert sind.

7. Hängeförder-Entladestation (10) nach einem der Ansprüche 1 bis 6, wobei der Aufnahmeabschnitt (42) unter einer durch die Öffnungseinheit (18) definierten Öffnungsposition der Tasche (20) angeordnet ist.

8. Hängeförder-Entladestation (10) nach einem der Ansprüche 1 bis 7, wobei der Hängeförderer (12) und der Aufnahmeförderer (16) zumindest in einem Bereich des Aufnahmeabschnitts (42) deckungsgleich angeordnet sind.

9. Hängeförder-Entladestation (10) nach einem der Ansprüche 1 bis 8, wobei ein Vertikalabstand (dᵥ) zwischen der Schiene (14) und dem Aufnahmeabschnitt (42), in einem Entladepunkt, so gewählt ist, dass das untere Ende der ungefüllten Tasche (20) einen Abstand von höchstens 10 mm und das untere Ende der befüllten Tasche (20) einen Abstand von höchstens 50 mm zu einer Oberseite des Aufnahmeförderers (16) aufweist.

10. Hängeförder-Entladestation (10) nach einem der Ansprüche 1 bis 9, wobei der Aufnahmeförderer (16) eingerichtet ist, mit einer Geschwindigkeit betrieben zu werden, so dass der Artikel (22) während eines Entladevorgangs aus der Tasche (20) gezogen wird, insbesondere während die Tasche (20) und der Aufnahmeförderer (16) weiterbewegt werden.

11. Hängeförder-Entladestation (10) nach einem der Ansprüche 1 bis 10, wobei die Entladestation (10) eingerichtet ist, den Aufnahmeförderer (16) und die Tasche (20) während eines Entladevorgangs mit unterschiedlichen Geschwindigkeiten zu bewegen.

12. Hängeförder-Entladestation (10) nach einem der Ansprüche 1 bis 11, wobei die Entladestation (10) eingerichtet ist, den Aufnahmeförderer (16) mit einer Fenstertechnologie zu betreiben, und wobei der Aufnahmeabschnitt (42) ein Fenster (44) der Fenstertechnologie bildet.

13. Hängeförderanlage (50) mit einer Hängeförderer-Entladestation (10) nach einem der Ansprüche 1-12.

14. Verfahren (100) zur Entladung eines Artikels (22) aus einer Tasche (20) mittels einer Hängeförder-Entladestation (10), insbesondere nach einem der Ansprüche 1 bis 12, wobei das Verfahren folgende Schritte umfasst:
Fördern (S10) der Tasche (20) mittels eines Hängeförderers (12) entlang einer Transportschiene (14) in eine Entladeposition;
Positionieren (S12) eines Aufnahmeabschnitts (42) eines federnd ausgebildeten Aufnahmeförderers (16) lotrecht unter der Tasche (20);
Öffnen (S14) eines in einem unteren Bereich der Tasche (20) angeordneten Verschlusses (24) durch eine Öffnungseinheit (18);
Entladen (S16) des Artikels (22) durch Schwerkraft aus der Tasche (20) auf den Aufnahmeabschnitt (42),
Abfedern (S18) eines Aufpralls des Artikels (22) durch eine federnde Bewegung des Aufnahmeabschnitts (42); und
Weiterfördern (S20) des Artikels (22) durch den Aufnahmeförderer (16) in einer Förderrichtung (34).

15. Verfahren nach Anspruch 14, wobei der Hängeförderer (12) und der Aufnahmeförderer (16) mit unterschiedlichen Fördergeschwindigkeiten betrieben werden, insbesondere jeweils kontinuierlich.
